# EUROPEAN PATENT SPECIFICATION

(11) **EP 0 295 054 B1**
(45) Date of publication and mention of the grant of the patent: **18.08.1993**
(21) Application number: 88305186.4
(22) Date of filing: 07.06.1988
(51) Int. Cl.: B01D 53/26, G11B 5/00, G11B 33/14

(54) **Humidity regulating apparatus**
Vorrichtung zur Steuerung des Feuchtigkeitsgehaltes
Dispositif pour contrôler le degré d'humidité

(30) Priority: 08.06.1987 JP 142720/87; 09.10.1987 JP 255360/87
(43) Date of publication of application: 14.12.1988
(73) Proprietor: MITSUBISHI DENKI KABUSHIKI KAISHA, Tokyo 100 (JP)
(72) Inventor: Yamauchi, Shiro Mitsubishi Denki Kabushiki Kaisha, Amagasaki-shi Hyogo 661 (JP); Rito, Noataka Mitsubishi Denki Kabushiki Kaisha, Amagasaki-shi Hyogo 661 (JP); Takahashi, Nobuyoshi Mitsubishi Denki K.K., Amagasaki-shi Hyogo 661 (JP)
(74) Representative: Lawson, David Glynne

(56) References cited:
- EP-A- 0 313 658
- US-A- 4 620 248
- JAPAN TELECOMMUNICATIONS REVIEW, vol. 24, no. 2, April 1982, page 167, left-hand column, reference 3.4, Tokyo, JP; "Humidity control mechanism and airfiltering mechanism"

## Description

This invention relates to a humidity regulating apparatus whereby the humidity inside a semi-sealed container that possesses permeability with the outside air can be regulated.

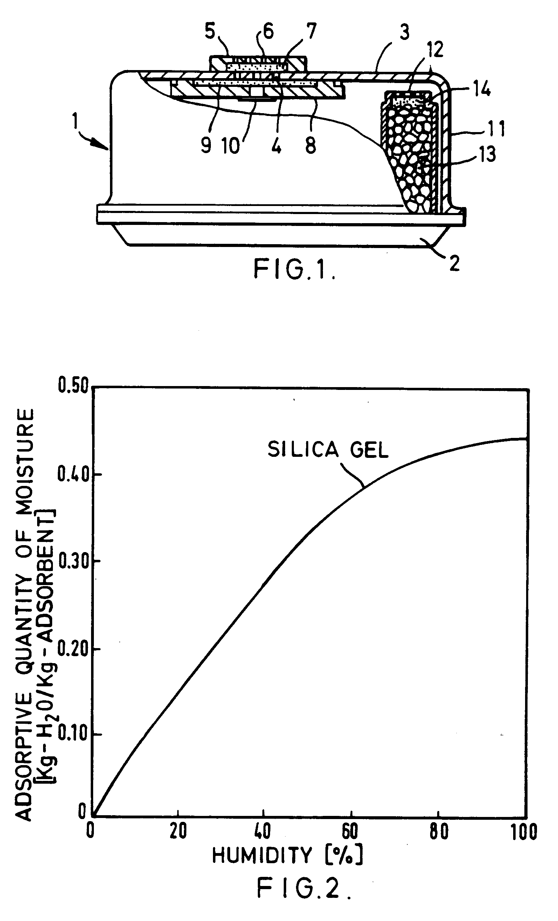

Fig. 1 is a partial cross-sectional diagram illustrating a conventional magnetic disk device that possesses a humidity regulating apparatus, for example, described on page 17 of materials No. 46-2 "TRIBOLOGY FOR MAGNETIC DISK STORAGE" of the No. 46 research association materials of The Magnetics Society of Japan (Corporation) (held: at the Kikai Shinko Hall July 21, 1986) titled MAGNETIC RECORDING (MAGNETIC RECORDING AND TRIBOLOGY). Fig. 2 is the adsorptive quantity of moisture curve diagram of silica gel that has been taken from the ratio of absorbed water per absorbent (g:g) listed, for example, on page 854 of the Handbook of Chemical Engineering (editor: Chemical Engineering Society of Japan) issued by Maruzen Co. Ltd. (2-6 Nihonbashi-doori, Chuo-ku, Tokyo)

In Fig. 1 semi-sealed type container 1 of a magnetic disk device comprises base 2 and case 3 that is secured in a sealed manner on base 2. Several ventilation holes 4 are provided in the top of case 3. Cap 5 is secured on to the top of case 3 so as to cover ventilation holes 4 thereof. Several ventilation holes 6 are provided in cap 5. Primary filter 7 is fitted inside cap 5 so that it is between both ventilation holes 4 and 6. Filter case 8 is secured to the inner surface of case 3. Secondary filter 9 is fitted inside filter case 8 so as to cover ventilation holes 4. Throttle 10 is fitted into filter case 8. Absorbent case 11 is provided inside container 1. Throttle 12 is fitted into the top of absorbent case 11. Silica gel 13 is filled inside absorbent case 11. Filter 14 is inserted between throttle 12 and silica gel 13.

The container contains at least one magnetic disk that is driven and rotated, a head that is held in proximity to the recording surface of the disk thereof, and an actuator that causes this head to move in the radial direction of the disk.

Outside air is sucked in by rotation of the disk and becomes clean air after passing through ventilation holes 6 of cap 5, primary filter 7, ventilation holes 4 of case 3, secondary filter 9 and throttle 10 of filter case 8, and flows into the inside of container 1. Accompanying this, the water in the outside air enters the inside of container 1 through diffusion, and the humidity inside rises. If rotation of the disk is stopped and the head is made to contact the disk in this state, there is the danger that the head and the disk may adsorb moisture and adhere.

A moisture adsorption device wherein silica gel 13 of the silica gel absorbent is filled into absorbent case 11 is provided inside container 1 and wherein the water that has entered is adsorbed. Further, throttle 12 that is provided at absorbent case 11 controls the adsorptive quantity of the water and prevents the inside of container 1 from attaining excessively low humidity.

Silica gel 13 is of a porous nature and its surface area per unit weight is extremely large, and further the adsorptive quantity of moisture of silica gel 13 is in an almost proportional relationship in a state where the gel structure is maintained as illustrated in Fig. 2. However, when the humidity rises and the water content increases, a state of saturation is reached.

In a conventional humidity regulating apparatus such as described above, when the adsorptive quantity of moisture in silica gel 13 reaches a state of saturation, the capability to adsorb water is lost even if the humidity rises excessively.

Furthermore, there are problems in that the adsorptive quantity of moisture could not be regulated if the sizes of throttle 10 that regulates the suction of the outside air and throttle 12 that controls the adsorptive quantity of moisture were fixed, and that the humidity inside container 1 could not be regulated in accordance with changes in the humidity of the outside air.

EP-A- 0313658 discloses a controlled - humidity enclosure comprising: a semi-sealed container with restricted communication between its interior and the ambient atmosphere; and at least one humidity - regulating element comprising a hydrogen ion conductor having a first surface in communication with the ambient atmosphere, a second surface in communication with the interior of the container, and means for applying a potential difference between the first and second surface.

The object of this invention is to provide a humidity regulating apparatus whereby the internal humidity can be regulated in accordance with the changes in the humidity of the outside air without the adsorptive quantity of moisture reaching a state of saturation, and to provide a humidity regulating apparatus of improved performance relative to that shown in EP-A-0313658.

The invention resides in a controlled - humidity enclosure comprising: a semi-sealed container provided with restricted communication between its interior and the ambient atmosphere; and at least one humidity - regulating element comprising a hydrogen ion conductor having a first surface in communication with the ambient atmosphere, a second surface in communication with the interior of the container, and means for applying a potential difference between the first and second surface, characterised in that a heater is embedded in the hydrogen ion conductor.

In a preferred construction the container has an opening in its wall, the hydrogen ion conductor is provided at the opening, a porous film-like first electrode is bonded to the inner surface of the said hydrogen ion conductor, a porous film-like second electrode is bonded to the outer surface of the said hydrogen ion conductor, insulating material electrically insulates said hydrogen ion conductor and said electrodes from the container and seals the said opening, and a DC power supply is provided whereby DC voltage is impressed across electrodes.

The heater provides heightened ion conductivity and more effective dehumidifying capabilities.

### BRIEF DESCRIPTION OF THE DRAWINGS

Figure 1 is a partial cross-section diagram illustrating a conventional humidity regulating apparatus.

Figure 2 is a characteristic curve illustrating the adsorptive quantity of moisture of silica gel.

Figure 3 is a partial cross-section illustrating humidity regulating apparatus in which this invention is employed.

Figure 4 is a dehumidifying characteristic curve illustrating the dehumidifying characteristics of the humidity regulating apparatus illustrated in Figure 3.

Figure 5 is a partial cross-sectional diagram illustrating the main parts of a humidity regulating apparatus in an embodiment of this invention.

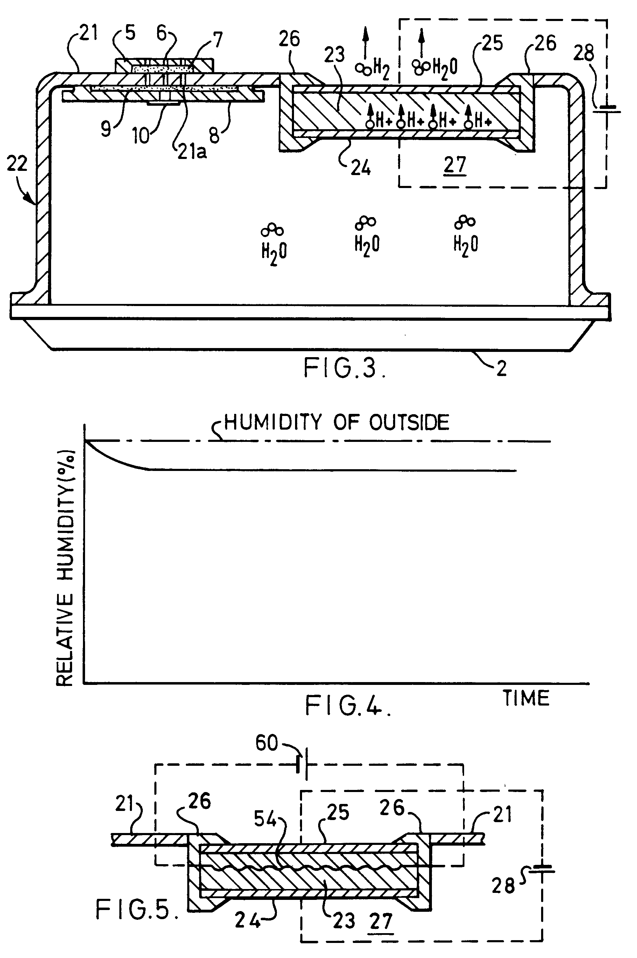

In the humidity regulating apparatus shown in Figure 3, base 2, cap 5, several ventilation holes 6, primary filter 7, filter case 8, secondary filter 9 and throttle 10 are identical to those in the conventional device in Fig. 1. Case 21 is secured in an air-tight state on base 2 and comprises a semi-sealed type container 22 together with base 2. Several ventilation holes 21a are provided in the top of case 21. The upper wall of the container is provided with an aperture, in which is sealed a humidity regulating element 27. A hydrogen ion conductor 23 comprises a solid electrolyte such as a solid polymer. A first electrode 24 is porous film-like and is bonded onto the inner surface of hydrogen ion conductor 23. A second porous film-like electrode 25 is bonded on to the outer surface of hydrogen ion conductor 23. Insulator 26 locates hydrogen ion conductor 23, electrode 24 and electrode 25 onto case 21 in a sealed and electrically insulated manner. Humidity regulating element 27 comprises hydrogen ion conductor 23, electrode 24, electrode 25 and insulator 26. DC power supply 28 is connected across electrodes 24 and 25.

Below follows a description regarding operation.

Clean air that has passed via ventilation holes 6 of cap 5, primary filter 7, ventilation holes 21a of case 21, secondary filter 19 and throttle 10 of filter case 8, and the moisture in the outside air simultaneously flow into container 22.

Electrode 24 is in contact with the air inside container 22, and electrode 25 with the outside air. The voltage of DC power supply 28 is impressed with inner electrode 24 as the anode and outer electrode 25 as the cathode. By impression of the voltage, the following electrolysis reaction proceeds at the interface of electrode 24 and hydrogen ion conductor 23:

H₂O→2H⁺+1/2 O₂+ 2e⁻

Thus, the water contained in the air inside container 22 is electrolyzed, the hydrogen ions move towards outer electrode 25 that is the cathode, oxygen molecules remain inside container 22, and the charge moves to electrode 24 that is the anode.

When these hydrogen ions reach the interface of hydrogen ion conductor 23 and outer electrode 25, at least one of the following two electrolysis reactions proceeds.

2H⁺+1/2 O₂ + 2e⁻→H₂O

2H⁺+2e⁻→H₂

That is, when the rate of supply of the hydrogen ions to electrode 25 from hydrogen ion conductor 23 exceeds the supply rate of the oxygen that is supplied to electrode 25 from the outside air, water and hydrogen are formed, and when the supply rate of the hydrogen ions is below the supply rate of the oxygen, water is formed.

Accordingly, the humidity inside container 22 initially is the same as the humidity of the outside air as illustrated in Fig. 4, however with the elapse of time, dehumidification proceeds, and the water in the air that flows in via ventilation holes 6 of cap 5, primary filter 7, ventilation holes 21a of case 21, secondary filter 9 and throttle 10 of case 8, and the water discharged to the outside air by humidity regulating element 27 finally equalize and dehumidification is carried out to a predetermined internal humidity. Further, when the voltage impressed across electrode 24 and electrode 25 rises, the electrolyzing current is increased and the electrolysis reaction is speeded up, if the amount of air that flows into container 22 is constant, the internal dehumidification speed increases.

Fig. 5 is a cross-section showing an electric heater 54 imbedded in the hydrogen ion conductor 23. A DC power supply 60 is connected to both ends of heater 54. When the voltage of DC power supply 60 is applied to heater 54 and hydrogen ion conductor 23 is heated, the ion conductivity is heightened and a more effective dehumidification capability can be expected.

Moreover, in the said working example, although voltage was impressed with inner electrode 24 as the anode and outer electrode 25 as the cathode, when, conversely, voltage is impressed with electrode 24 as the cathode and electrode 25 as the anode, the electrolysis reaction proceeds conversely to that of the aforementioned working example, and the humidity inside container 22 becomes higher than that of the outside air and the inside is humidified.

The hydrogen ion conductor 23 may be a solid polymer electrolyte such as an ion exchange resin, or an inorganic solid electrolyte such as a ß- alumina substitute.

Although the embodiments have been described using atmospheric air as the outside atmosphere, the atmosphere inside and/or outside may be a gas that contains one or more of oxygen, nitrogen, water, hydrogen, helium, argon, etc. and in the case of the ambient atmosphere being a gas that does not contain oxygen, a hydrogen generating reaction only is performed on outer electrode 25 for hydrogen that is supplied to electrode 25 from hydrogen ion conductor 23.

In this way, according to this invention, a humidity regulating apparatus can be provided whereby humidity inside can be regulated in accordance with the changes in humidity of the external atmosphere without the adsorptive quantity of moisture reaching a state of saturation, as the water in the air that is supplied to hydrogen ion conductor 23 after having contacted inner electrode 24 is electrolyzed by impressing DC voltage across electrode 24 and outer electrode 25 of humidity regulating element 27, and the hydrogen ions thereof are transported and at least one of hydrogen and water is discharged from electrode 25. Furthermore, the ion conductivity of hydrogen ion conductor 23 can be heightened and a more effective dehumidification capability can be expected by imbedding heater 54 in hydrogen ion conductor 23 of humidity regulating element 27 and impressing a DC voltage on heater 54 and heating the H ion conductor.

## Claims

1. A controlled - humidity enclosure comprising: a semi-sealed container (22) with restricted communication between its interior and the ambient atmosphere; and at least one humidity - regulating element comprising a hydrogen ion conductor (23) having a first surface in communication with the ambient atmosphere, a second surface in communication with the interior of the container, and means (28) for applying a potential difference between the first and second surface, characterized in that a heater (54) is embedded in the hydrogen ion conductor.

2. A controlled humidity enclosure as claimed in claim 1 in which
the container (22) has an opening in its wall,
the hydrogen ion conductor (23) is provided at the opening and the means for applying a potential difference are,
a porous film-like first electrode (24) that is bonded to the inner surface of the said hydrogen ion conductor,
a porous film-like second electrode (25) that is bonded to the outer surface of the said hydrogen ion conductor, and
a power supply (28) whereby DC voltage is impressed across said electrodes.
and insulating material (26) electrically insulates said hydrogen ion conductor and said electrodes from the said semi-sealed type container and seals the said opening.

3. The controlled humidity enclosure of claim 1 or 2 in which the heater (54) is a DC electrical heater.

4. A controlled humidity enclosure as claimed in claim 1, 2, or 3 wherein DC voltage is impressed on the first electrode (24) as the anode and the second electrode (25) as the cathode.

5. A controlled humidity enclosure as claimed in claim 1, 2, 3, or 4 wherein the DC voltage is variable.

6. A controlled humidity enclosure as claimed in any of claims 1 to 5 wherein the hydrogen ion conductor is a solid polymer electolyte.

7. A controlled humidity enclosure as claimed in claim 6 wherein the solid polymer electrolyte is an ion exchange resin.

8. A controlled humidity enclosure as claimed in any of claims 1 to 5 wherein the hydrogen ion conductor is an inorganic solid electrolyte.

9. A controlled humidity enclosure in claim 8 wherein the inorganic solid electrolyte is a β- alumina substitute.

## Patentansprüche

1. Feuchtigkeitsgeregeltes Behältnis, umfassend: einen halbdichten Behälter (22) mit beschränkter Verbindung zwischen seinem Innenraum und der umgebenden Atmosphäre; und wenigstens ein Feuchtigkeitsregelelement, das folgendes aufweist:
einen Wasserstoffionenleiter (23) mit einer ersten Oberfläche, die mit der umgebenden Atmosphäre in Verbindung steht, und mit einer zweiten Oberfläche, die mit dem Innenraum des Behälters in Verbindung steht, sowie Einrichtungen (28) zum Anlegen einer Potentialdifferenz zwischen der ersten und der zweiten Oberfläche,
dadurch gekennzeichnet,
daß in den Wasserstoffionenleiter eine Heizeinrichtung (54) eingebettet ist.

2. Feuchtigkeitsgeregeltes Behältnis nach Anspruch 1, bei dem:
- der Behälter (22) eine Öffnung in seiner Wand besitzt,
- der Wasserstoffionenleiter (23) an der Öffnung vorgesehen ist und die Einrichtungen zum Anlegen einer Potentialdifferenz folgende sind:
- eine poröse folienartige erste Elektrode (24), die mit der Innenoberfläche des Wasserstoffionenleiters verbunden ist,
- eine poröse folienartige zweite Elektrode (25), die mit der Außenoberfläche des Wasserstoffionenleiters verbunden ist, und
- eine Stromversorgung (28) zum Aufprägen einer Gleichstromspannung auf die Elektroden,
- und bei dem Isoliermaterial (26) den Wasserstoffionenleiter und die Elektroden gegenüber dem Behälter vom halbdichten gekapselten Typ elektrisch isoliert und die genannte Öffnung dicht abschließt.

3. Feuchtigkeitsgeregeltes Behältnis nach Anspruch 1 oder 2,
wobei die Heizeinrichtung (54) eine elektrische Gleichstromheizeinrichtung ist.

4. Feuchtigkeitsgeregeltes Behältnis nach Anspruch 1, 2 oder 3,
wobei die erste Elektrode (24) als Anode und die zweite Elektrode (25) als Kathode mit Gleichspannung beaufschlagt werden.

5. Feuchtigkeitsgeregeltes Behältnis nach Anspruch 1, 2, 3 oder 4,
wobei die Gleichspannung variabel ist.

6. Feuchtigkeitsgeregeltes Behältnis nach einem der Ansprüche 1 bis 5,
wobei der Wasserstoffionenleiter ein fester Polymerelektrolyt ist.

7. Feuchtigkeitsgeregeltes Behältnis nach Anspruch 6,
wobei der feste Polymerelektrolyt ein Ionenaustauschharz ist.

8. Feuchtigkeitsgeregeltes Behältnis nach einem der Ansprüche 1 bis 5,
wobei der Wasserstoffionenleiter ein anorganischer fester Elektrolyt ist.

9. Feuchtigkeitsgeregeltes Behältnis nach Anspruch 8,
wobei der anorganische feste Elektrolyt ein β-Aluminiumoxid-Substitut ist.

## Revendications

1. Une enceinte à humidité contrôlée comprenant: un conteneur semi-hermétique (22) avec une communication restreinte entre son intérieur et l'atmosphère ambiante; et au moins un élément de réglage de l'humidité comprenant un conducteur à ions d'hydrogène (23) comportant une première surface en communication avec l'atmosphère ambiante, une deuxième surface en communication avec l'intérieur du conteneur et un moyen (28) pour appliquer une différence de potentiel entre la première et la deuxième surface, caractérisée en ce qu'un radiateur (54) est intégré dans le conducteur à ions d'hydrogène.

2. Une enceinte à humidité contrôlée selon la revendication 1, dans laquelle
le conteneur (22) comporte une ouverture dans sa paroi,
le conducteur à ions d'hydrogène (23) est agencé au niveau de l'ouverture et les moyens pour appliquer une différence de potentiel étant
une première électrode poreuse sous forme de film (24), liée à la surface interne du dit conducteur à ions d'hydrogène,
une deuxième électrode poreuse sous forme de film (25) liée à la surface externe du dit conducteur à ions d'hydrogène, et
une source d'énergie (28), permettant l'application d'une tension continue aux dites électrodes,
un matériau isolant (26) isole électriquement ledit conducteur à ions d'hydrogène et lesdites électrodes du dit conteneur de type semi-hermétique et scelle l'ouverture.

3. L'enceinte à humidité contrôlée selon les revendications 1 ou 2, dans laquelle le radiateur (54) est un radiateur électrique à courant continu.

4. Une enceinte à humidité contrôlée selon les revendications 1, 2 ou 3, dans laquelle une tension continue est appliquée à la première électrode (24) comme anode et à la deuxième électrode (25) comme cathode.

5. Une enceinte à humidité contrôlée selon les revendications 1, 2, 3 ou 4, dans laquelle la tension continue est variable.

6. Une enceinte à humidité contrôlée selon l'une quelconque des revendications 1 à 5, dans laquelle le conducteur à ions d'hydrogène est un électrolyte polymère solide.

7. Une enceinte à humidité contrôlée selon la revendication 6, dans laquelle l'électrolyte polymère solide est une résine d'échange d'ions.

8. Une enceinte à humidité contrôlée selon l'une quelconque des revendications 1 à 5, dans laquelle le conducteur à ions d'hydrogène est un électrolyte inorganique solide.

9. Une enceinte à humidité contrôlée selon la revendication 8, dans laquelle l'électrolyte inorganique solide est un substitut d'β-alumine.
